# FASCICULE DE BREVET EUROPEEN

(11) **EP 2 318 679 B1**
(45) Date de publication et mention de la délivrance du brevet: **02.09.2020**
(21) Numéro de dépôt: 09784268.6
(22) Date de dépôt: 15.07.2009
(51) Int. Cl.: F02C 7/045, F02K 3/06, F01D 25/24, B64D 33/02

(54) **NACELLE DE TURBOMACHINE**
GONDEL EINER TURBOMASCHINE
TURBOMACHINE NACELLE

(30) Priorité: 13.08.2008 FR 0804585
(43) Date de publication de la demande: 11.05.2011
(73) Titulaire: Safran Aircraft Engines, 75015 Paris (FR)
(72) Inventeur: RIOU, Georges, Jean, Xavier, 77000 Melun (FR); VERSEAUX, Philippe, 91210 Draveil (FR)
(74) Mandataire: Ernest Gutmann - Yves Plasseraud S.A.S.
(86) Numéro de dépôt international: PCT/FR2009/000867
(87) Numéro de publication internationale: WO 2010/018314

(56) Documents cités:
- WO-A-2006/136748
- GB-A- 2 273 131
- GB-A- 2 288 578
- US-B1- 6 364 603

## Description

La présente invention concerne une paroi interne d'une nacelle de turbomachine telle qu'un turboréacteur ou un turbopropulseur d'avion.

Les documents GB-A-2 273 131, US-B1-6 364 603, GB-A-2 288 578 et WO-A-2006/136748 décrivent des parois de nacelle de turbomachine.

Une paroi interne de nacelle comprend en général un carter annulaire externe de soufflante qui entoure les aubes de soufflante de la turbomachine et à l'intérieur duquel peut être fixée une couche annulaire de matériau abradable entourant les aubes de soufflante. Le carter de soufflante comprend à son extrémité aval une bride annulaire de fixation sur un carter intermédiaire de la turbomachine, et à son extrémité amont une bride annulaire de fixation sur l'extrémité aval d'une bague dont l'extrémité amont est reliée à une cloison annulaire transversale de liaison des parois interne et externe de la nacelle. Cette cloison transversale permet notamment de rigidifier la nacelle et aussi d'assurer une fonction de pare-feu.

Une structure annulaire interne insonorisante est agencée en amont des aubes de soufflante pour réduire la propagation des ondes acoustiques générées par ces aubes en fonctionnement. Cette structure insonorisante est située en amont de la couche abradable du carter de soufflante, et s'étend dans le prolongement axial de celle-ci.

Dans la technique actuelle d'installation d'une structure insonorisante monobloc, cette dernière est fixée au voisinage de son extrémité aval sur la bague précitée, et à son extrémité amont sur la lèvre d'entrée d'air de la nacelle.

On a déjà proposé de former la structure annulaire par assemblage de plusieurs panneaux acoustiques structuraux. Cependant, les zones de liaison entre les panneaux constituent des zones de rupture brusque d'impédance acoustique qui dégradent de façon sensible les performances d'insonorisation de la structure. La structure insonorisante est donc de préférence réalisée d'un seul panneau sensiblement cylindrique s'étendant axialement depuis la couche abradable du carter de soufflante jusqu'à la lèvre d'entrée d'air de la nacelle.

Cependant, cette technologie présente plusieurs inconvénients. Pour la maintenance, il est nécessaire de retirer le panneau cylindrique pour démonter la lèvre d'entrée d'air, ce qui est relativement long. De plus, ce panneau est structural pour transmettre les efforts entre la lèvre d'entrée d'air et le carter intermédiaire, et a de ce fait une masse relativement importante. Il est en outre coûteux et complexe à réaliser. Enfin, les brides de liaison du carter de soufflante à la bague sont situées à une faible distance axiale des aubes de soufflante et peuvent être exposées à des chocs violents et à des sollicitations mécaniques importantes en cas de perte d'une aube de soufflante.

L'invention a notamment pour but d'apporter une solution simple, efficace et économique à au moins une partie de ces inconvénients.

Elle propose à cet effet une nacelle de turbomachine selon la revendication 1.

Selon l'invention, la bride de liaison du carter interne à la bague est déportée jusqu'à l'extrémité amont de la structure insonorisante. Cette bride est ainsi à une distance axiale relativement importante des aubes de soufflante, ce qui limite le risque de rupture de ces brides en cas de perte d'une aube de soufflante. Cette bride qui n'est pas exposée à des chocs et à des sollicitations trop importantes en cas de perte d'aube peut avoir des dimensions et une masse inférieures à celles de la technique antérieure. De plus, les moyens de fixation de cette bride sur la bague peuvent être allégés, simplifiés et moins nombreux sur une circonférence. Cela est rendu possible par l'allongement axial du carter de soufflante qui s'étend désormais depuis le carter intermédiaire jusqu'à la lèvre d'entrée d'air. Ce carter permet ainsi de rigidifier la paroi interne de la nacelle et d'assurer à lui seul la transmission des efforts entre la lèvre d'entrée d'air et le carter intermédiaire. On peut alors utiliser une structure insonorisante non structurale et donc moins chère et moins complexe à réaliser. Il est par ailleurs possible d'alléger voire de supprimer la cloison transversale de la technique antérieure, grâce à la rigidité supplémentaire procurée par le carter de soufflante. Le carter de soufflante est monobloc et de préférence réalisé dans un matériau léger et résistant tel qu'un matériau composite.

La structure insonorisante peut être fixée sur le carter de soufflante, par exemple par collage, soudage, brasage, rivetage ou vissage. Elle peut éventuellement être fixée de manière amovible sur le carter de soufflante pour faciliter son remplacement en cas de détérioration.

La bague est de préférence fixée à son extrémité amont, par exemple par rivetage, sur la lèvre d'entrée d'air de la nacelle. La présente invention permet de faciliter l'opération de démontage de la lèvre d'entrée d'air car il n'est plus nécessaire de retirer la structure insonorisante lors de cette opération.

La bride du carter de soufflante est fixée sur une bride aval de la bague, ces brides s'étendant de préférence sensiblement radialement ou axialement par rapport à l'axe longitudinal de la turbomachine.

Dans le cas où ces brides sont radiales, leur plan de jonction peut être sensiblement aligné avec l'extrémité amont de la structure insonorisante. En variante, ce plan de jonction est situé à distance de l'extrémité amont de la structure insonorisante, en amont ou en aval de cette extrémité.

La structure insonorisante s'étend axialement depuis l'extrémité amont du carter de soufflante jusqu'à une partie seulement de la dimension axiale de ce carter.

La structure insonorisante peut être formée d'un panneau annulaire acoustique monobloc ou sectorisé.

La présente invention concerne également une turbomachine, telle qu'un turboréacteur ou un turbopropulseur d'avion, comprenant une nacelle dont la paroi interne est du type précité.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une demi-vue schématique partielle en coupe axiale de l'entrée d'air et de la soufflante d'une turbomachine selon la technique antérieure d'installation d'une structure acoustique monobloc,
- la figure 2 est une vue schématique partielle en coupe axiale de l'entrée d'air et de la soufflante d'une turbomachine selon l'invention,
- la figure 3 est une vue schématique partielle en coupe axiale des moyens de fixation d'un carter de soufflante à une bague de la paroi interne d'une nacelle selon l'invention,
- les figures 4 à 6 sont des figures correspondant à la figure 3 et représentent des variantes de réalisation des moyens de fixation du carter à la bague.

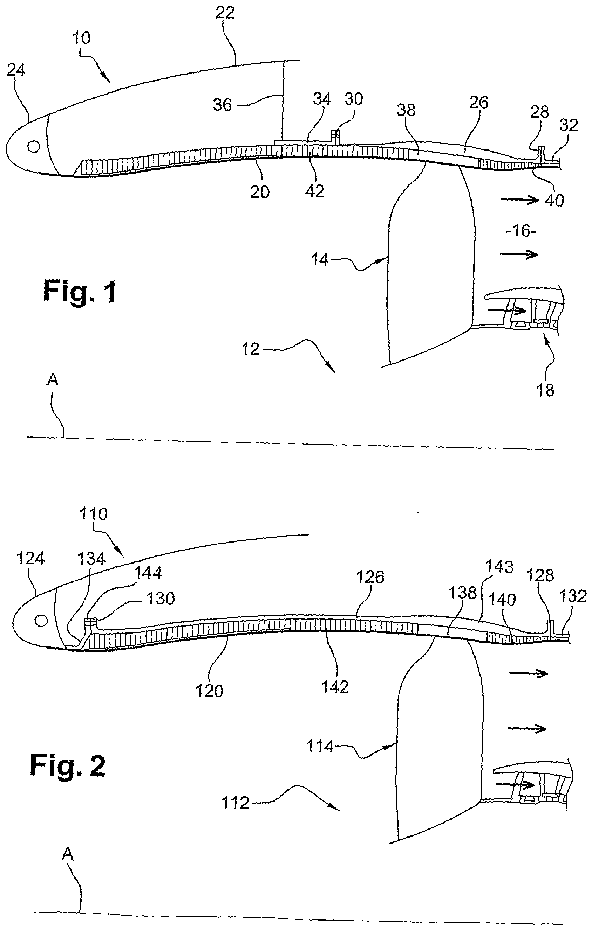

On se réfère d'abord à la figure 1 qui est une demi-vue schématique partielle en coupe axiale d'un moteur d'avion comportant une nacelle 10 entourant un turboréacteur 12 qui comprend en amont une soufflante 14 tournant à l'intérieur de la nacelle 10 et générant un flux secondaire qui s'écoule dans un conduit annulaire 16 formé entre la nacelle et le turboréacteur et qui forme une partie de la poussée produite par le moteur.

Le turboréacteur 12 comprend en outre en aval de la soufflante 14 un compresseur 18 dans lequel passe une partie de l'air s'engageant dans la nacelle 10 appelé flux primaire.

La nacelle 10 comprend deux parois annulaires 20, 22 sensiblement cylindriques qui s'étendent l'une à l'intérieur de l'autre et qui sont reliées à leurs extrémités amont par une lèvre annulaire 24 d'entrée d'air ayant en section un profil bombé ou incurvé convexe vers l'amont.

La paroi interne 20 de la nacelle comprend un carter externe de soufflante 26 sensiblement cylindrique entourant la soufflante 14 et comportant des brides annulaires 28, 30 de fixation à ses extrémités longitudinales. La bride aval 28 du carter de soufflante 26 est fixée par des moyens du type vis-écrou sur une bride annulaire amont d'un carter intermédiaire 32 entourant le compresseur 18 de la turbomachine, et la bride amont 30 du carter de soufflante 26 est fixée par des moyens du type vis-écrou sur une bride annulaire aval d'une bague 34 ayant une dimension axiale plus faible que celle du carter de soufflante. L'extrémité amont de cette bague 34 est reliée à la périphérie interne d'une cloison annulaire transversale 36 de renfort et de transmission d'efforts, dont la périphérie externe est reliée à la paroi externe 22 de la nacelle.

Une couche annulaire 38 en matériau abradable est fixée sur la surface cylindrique interne du carter de soufflante 26 et entoure les aubes de soufflante. Cette couche s'étend axialement sur une partie intermédiaire ou médiane du carter 26. La dimension axiale de cette couche 38 est sensiblement égale à la dimension axiale maximale des aubes de soufflante 14. Des panneaux insonorisants 40, 42 sont en outre fixés sur le carter de soufflante 26 et sur la bague 34, en amont et en aval de la couche abradable 38.

Des panneaux insonorisants aval 40 sont fixés sur la surface cylindrique interne du carter de soufflante 26, sur une partie d'extrémité aval de celui-ci. Ils sont disposés en aval de la couche abradable 38, dans le prolongement axial de celle-ci.

Un panneau insonorisant amont 42 cylindrique et monobloc est fixé à son extrémité amont sur la lèvre d'entrée d'air 24 et au voisinage de son extrémité aval sur la surface cylindrique interne de la bague 34. Ce panneau 42 est structural et relie de manière rigide la lèvre 24 à la bague 34. La partie d'extrémité aval de ce panneau est engagée dans l'extrémité amont du carter de soufflante 26 et s'étend dans le prolongement axial de la couche abradable 38 portée par ce carter.

Dans cette configuration, le carter de soufflante 26 a une dimension axiale qui est inférieure à celle du panneau amont 42 et qui est par exemple égale à deux ou trois fois environ celle des aubes de soufflante. Cette technologie présente de nombreux inconvénients décrits plus haut.

L'invention permet de remédier au moins en partie à ces problèmes grâce à l'allongement axial vers l'amont du carter de soufflante et donc au déport vers l'amont de la bride de liaison de ce carter de soufflante à la bague.

Dans l'exemple de réalisation représenté en figure 2, le carter de soufflante 126 s'étend sensiblement jusqu'à l'extrémité amont du panneau amont 142 et a donc une dimension axiale supérieure à celle de ce panneau. Cette dimension axiale est par exemple égale à cinq ou six fois celle des aubes de soufflante 114, et est donc environ deux fois plus longue que dans la technique antérieure.

Le carter de soufflante 126 est formé d'une seule pièce et peut être réalisé en matériau composite. Il est par exemple du type de celui décrit dans la demande FR 07/53449. Ce carter 126 présente de préférence une surépaisseur 143 entourant localement les aubes de soufflante 114 de façon à renforcer le carter dans cette zone.

Comme dans la technique antérieure, le carter 126 comprend à son extrémité aval une bride 128 de fixation sur le carter intermédiaire 132. Il comprend également à son extrémité amont une bride annulaire 130 de fixation sur une bride annulaire aval 144 d'une bague 134 dont l'extrémité amont est fixée, par exemple par des rivets, sur la périphérie interne de la lèvre d'entrée d'air 124.

Le carter de soufflante 126 assure ainsi la transmission des efforts depuis la lèvre d'entrée d'air 124 jusqu'au carter intermédiaire 132.

La cloison transversale 36 de la technique antérieure n'est plus nécessaire et peut être supprimée.

Le panneau insonorisant amont 142 diffère de celui de la technique antérieure en ce qu'il est non structural et donc plus léger et moins lourd. Il n'est plus nécessaire de le fixer sur la bague. Il est fixé, par soudage, brasage, collage, rivetage, vissage, etc..., sur la surface interne du carter de soufflante 126. Le panneau 142 peut être formé d'une seule pièce ou bien être sectorisé.

Les panneaux aval 140 et la couche abradable 138 sont sensiblement identiques à ceux de la technique antérieure. Dans l'exemple représenté, la bague 134 comprend une partie d'extrémité amont sensiblement cylindrique fixée à la lèvre d'entrée d'air 124 et une partie d'extrémité aval sensiblement tronconique évasée vers l'aval et comportant à son extrémité aval la bride 144 de fixation au carter de soufflante 126. L'extrémité amont du panneau 142 est engagée dans la partie tronconique de la bague 134 et a une forme complémentaire de cette partie. La surface cylindrique interne du panneau 142 est alignée avec la surface cylindrique interne définie par la partie cylindrique amont de la bague 134. Les brides 130, 144 du carter de soufflante 126 et de la bague 134 s'étendent sensiblement radialement par rapport à l'axe longitudinal A du moteur.

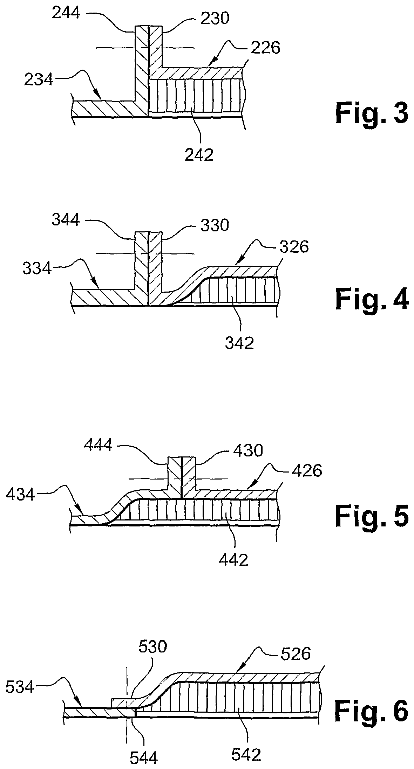

Les figures 3 à 6 représentent d'autres variantes de réalisation des moyens de fixation de l'extrémité amont du carter de soufflante sur la bague reliée à la lèvre d'entrée d'air.

Dans le cas de la figure 3, la bague 234 est cylindrique et comporte à son extrémité aval à une bride 244 de fixation sur la bride 230 du carter de soufflante 226. Le plan de jonction des brides est aligné avec l'extrémité amont du panneau insonorisant 242, et la surface interne de ce panneau est alignée axialement avec celle de la bague.

Dans la variante de la figure 4, la bague est sensiblement identique à celle de la figure 3. Le carter de soufflante 326 comprend une partie d'extrémité amont sensiblement tronconique convergent vers l'amont et vers l'axe de la turbomachine, et portant à son extrémité amont la bride 330 de fixation sur la bride 344 de la bague 334. Le panneau 342 a à son extrémité amont une forme complémentaire de celle du carter et sa surface cylindrique interne est alignée avec la périphérie interne de la partie d'extrémité amont du carter de soufflante 326.

La variante représentée en figure 5 diffère des moyens de fixation de la figure 2 en ce que le plan de jonction de la bride 430 du carter de soufflante 426 et de la bride 444 de la bague 434 est plus éloigné axialement vers l'aval de l'extrémité amont du panneau insonorisant 442.

Dans la variante de réalisation représentée en figure 6, les brides 530, 544 de fixation du carter de soufflante 526 et de la bague 534 s'étendent sensiblement axialement et non pas radialement par rapport à l'axe longitudinal de la turbomachine. La bague 534 a une forme sensiblement cylindrique et est recouverte à son extrémité aval par la bride axiale 530 amont du carter de soufflante 526. La surface cylindrique interne du panneau 542 est alignée avec la surface interne de la bague 534.

## Revendications

1. Nacelle (110) de turbomachine (112) comprenant une paroi interne (120) et une bague (134), ladite paroi interne comportant :
- un carter (126) annulaire externe de soufflante,
- une structure (142) annulaire interne insonorisante destinée à s'étendre en amont des aubes de soufflante, et
- une bride (130) de fixation sur ladite bague (134), la bride et la bague étant coaxiales, et dans ladite nacelle (110):
- le carter (126) annulaire externe de soufflante est formé d'une seule pièce, est destiné à entourer des aubes de soufflante (114) et s'étend sensiblement jusqu'à une extrémité amont de la structure (142) annulaire interne insonorisante, lequel carter (126) annulaire comporte, à son extrémité amont, ladite bride (130), laquelle est située au voisinage de l'extrémité amont de la structure (142) insonorisante, et
- ladite nacelle comprend une couche annulaire (138) en matériau abradable, laquelle est fixée sur une surface cylindrique interne du carter de soufflante (126) et est destinée à entourer les aubes de soufflante (114).

2. Nacelle selon la revendication 1, **caractérisée en ce que** la structure insonorisante (142) est fixée sur le carter de soufflante (126), par collage, soudage, brasage, rivetage, ou vissage.

3. Nacelle selon l'une des revendications précédentes, **caractérisée en ce que** la bride (130) du carter de soufflante (126) est fixée sur une bride de la bague (134), ces brides s'étendant sensiblement radialement ou axialement par rapport à l'axe longitudinal de la turbomachine.

4. Nacelle selon la revendication 3, **caractérisée en ce que** le plan de jonction des brides (130) est sensiblement aligné radialement avec l'extrémité amont de la structure insonorisante (142).

5. Nacelle selon la revendication 3, **caractérisée en ce que** le plan de jonction des brides (130) est situé à distance de l'extrémité amont de la structure insonorisante (142), en amont ou en aval de cette extrémité.

6. Nacelle selon l'une des revendications précédentes, **caractérisée en ce que** la structure insonorisante (142) s'étend axialement depuis l'extrémité amont du carter de soufflante (126) sur une partie seulement de la dimension axiale de ce carter.

7. Nacelle selon l'une des revendications précédentes, **caractérisée en ce que** la structure insonorisante (142) est formée d'un panneau annulaire acoustique monobloc ou sectorisé.

8. Nacelle selon l'une des revendications précédentes, **caractérisée en ce que** le carter de soufflante (126) est réalisé en matériau composite.

9. Nacelle selon l'une des revendications précédentes, **caractérisée en ce que** la bague (134) est fixée à son extrémité amont sur ladite lèvre d'entrée d'air (124) de la nacelle.

10. Turbomachine (112), telle qu'un turboréacteur ou un turbopropulseur d'avion, **caractérisée en ce qu'**elle comporte une nacelle (110) comprenant une paroi interne (120) selon l'une des revendications précédentes.

## Patentansprüche

1. Gondel (110) eines Turbotriebwerks (112), enthaltend eine Innenwand (110) und einen Ring (134), wobei die Innenwand enthält:
- ein äußeres, ringförmiges Gebläsegehäuse (126),
- eine innere, schalldämmende ringförmige Struktur (142), die dazu bestimmt ist, sich stromaufwärts der Gebläseschaufeln zu erstrecken, und
- einen Befestigungsflansch (130) zum Befestigen an den Ring (134), wobei der Flansch und der Ring koaxial verlaufen, und wobei
- das äußere, ringförmige Gebläsegehäuse (126) einteilig ausgebildet ist, dazu bestimmt ist, die Gebläseschaufeln (114) zu umgeben und sich im Wesentlichen bis zu einem stromaufwärtigen Ende der inneren, schalldämmenden ringförmigen Struktur (142) erstreckt, wobei das ringförmige Gehäuse (126) an seinem stromaufwärtigen Ende den Flansch (130) enthält, der sich benachbart zum stromaufwärtigen Ende der schalldämmenden Struktur (142) befindet, und
- die Gondel eine ringförmige Schicht (138) aus abreibbarem Material aufweist, die an eine zylindrische Innenfläche des Gebläsegehäuses (126) befestigt und dazu bestimmt ist, die Gebläseschaufeln (114) zu umgeben.

2. Gondel nach Anspruch 1,
**dadurch gekennzeichnet, dass**
die schalldämmende Struktur (142) durch Verkleben, Verschweißen, Verlöten, Vernieten oder Verschrauben an das Gebläsegehäuse (126) befestigt ist.

3. Gondel nach einem der vorangehenden Ansprüche,
**dadurch gekennzeichnet, dass**
der Flansch (130) des Gebläsegehäuses (126) an einen Flansch des Rings (134) befestigt ist, wobei diese Flansche sich im Wesentlichen radial oder axial zur Längsachse des Turbotriebwerks erstrecken.

4. Gondel nach Anspruch 3,
**dadurch gekennzeichnet, dass**
die Verbindungsebene der Flansche (130) im Wesentlichen radial zum stromaufwärts gelegenen Ende der schalldämmenden Struktur (142) ausgerichtet ist.

5. Gondel nach Anspruch 3,
**dadurch gekennzeichnet, dass**
die Verbindungsebene der Flansche (130) sich in einem Abstand vom stromaufwärts gelegenen Ende der schalldämmenden Struktur (142), entweder stromaufwärts oder stromabwärts von diesem Ende, befindet.

6. Gondel nach einem der vorangehenden Ansprüche,
**dadurch gekennzeichnet, dass**
die schalldämmende Struktur (142) sich axial vom stromaufwärts gelegenen Ende des Gebläsegehäuses (126) nur über einen Teil der axialen Abmessung dieses Gehäuses erstreckt.

7. Gondel nach einem der vorangehenden Ansprüche,
**dadurch gekennzeichnet, dass**
die schalldämmende Struktur (142) aus einer einteiligen oder sektorisierten, ringförmigen Akustik-Platte besteht.

8. Gondel nach einem der vorangehenden Ansprüche,
**dadurch gekennzeichnet, dass**
das Gebläsegehäuse (126) aus Verbundwerkstoff hergestellt ist.

9. Gondel nach einem der vorangehenden Ansprüche,
**dadurch gekennzeichnet, dass** der Ring (134) ist an seinem stromaufwärtigen Ende an einer Lufteinlaßlippe (124) der Gondel befestigt.

10. Turbotriebwerk (112), wie etwa Turbostrahltriebwerk oder Turboprop-Triebwerk für Flugzeuge, **dadurch gekennzeichnet, dass** es eine Gondel (110) mit einer Innenwand (120) nach einem der vorangehenden Ansprüche enthält.

## Claims

1. A nacelle (110) for a turbomachine (112) comprising an inner wall (120) and a ring (134), said inner wall comprising:
- an outer annular fan casing (126),
- a soundproofing inner annular structure (142) for extending upstream from the fan blades, and
- a flange (130) for fastening to said ring (134), the flange and the ring being coaxial, and in said nacelle (110) :
- the outer annular fan casing (126) is a one-piece structure, is intended to surround fan blades (114) ans extends substantially as far as the upstream end of the soundproofing inner annular structure (142), which annular casing (126) comprises, at the upstream end, said flange (130), which is situated in the vicinity of the upstream end of the soundproofing structure (142), and
- said nacelle comprises an annular layer (138) of abradable material, which is fastened to an inner cylindrical surface of the fan casing (126) and is intended to surround the fan blades (114).

2. A nacelle according to claim 1, **characterized in that** the soundproofing structure (142) is fastened to the fan casing (126), by adhesive, welding, brazing, riveting, or screw fastening.

3. A nacelle according to any one of the preceding claims, **characterized in that** the flange (130) of the fan casing (126) is fastened to a flange of the ring (134), these flanges extending substantially radially or axially relative to the longitudinal axis of the turbomachine.

4. A nacelle according to claim 3, **characterized in that** the junction plane of the flanges (130) is substantially in radial alignment with the upstream end of the soundproofing structure (142).

5. A nacelle according to claim 3, **characterized in that** the junction plane of the flanges (130) is situated at a distance from the upstream end of the soundproofing structure (142), upstream or downstream from said end.

6. A nacelle according to any one of the preceding claims, **characterized in that** the soundproofing structure (142) extends axially from the upstream end of the fan casing (126) over a fraction only of the axial dimension of this casing.

7. A nacelle according to any one of the preceding claims, **characterized in that** the soundproofing structure (142) is formed by a one-piece or sectorized acoustic annular panel.

8. A nacelle according to any one of the preceding claims, **characterized in that** the fan casing (126) is made of composite material.

9. A nacelle according to any one of the preceding claims, **characterized in that** the ring (134) is fastened, at its upstream end, to an air intake lip (124) of the nacelle.

10. A turbomachine (112), such as an airplane turboprop or turbojet, **characterized in that** it includes a nacelle (110) having an inside wall (120) according to any one of the preceding claims.
